# EUROPEAN PATENT APPLICATION

(11) **EP 2 650 837 A1**
(43) Date of publication of application: **16.10.2013**
(21) Application number: 13163279.6
(22) Date of filing: 11.04.2013
(51) Int. Cl.: G06Q 30/02

(54) **Method for a job seeker landing page**

(30) Priority: 11.04.2012 EP 12163718
(71) Applicant: StepStone GmbH, 10969 Berlin (DE)
(72) Inventor: de Rassenfosse, Christophe, 1080 Brussels (BE)
(74) Representative: Brants, Johan P.E.

(57) **Abstract**

The present invention relates to the field of job listing advertisement.

## Description

### FIELD OF THE INVENTION

The present invention relates to the field of job listing advertisement.

### BACKGROUND

Advertising using traditional media, such as television, radio, newspapers and magazines, is well known. Unfortunately, even when armed with demographic studies and entirely reasonable assumptions about the typical audience of various media outlets, advertisers recognize that much of their ad budget is simply wasted. Moreover, it is very difficult to identify and eliminate such waste. Recently, advertising over more interactive media has become popular. For example, as the number of people using the Internet has exploded, advertisers have come to appreciate media and services offered over the Internet as a powerful way to advertise. Some websites provide an information search functionality that is based on query keywords entered by the user seeking information. This user query can be used as an indicator of the type of information of interest to the user. By comparing the user query to a list of keywords specified by an advertiser, it is possible to provide some form of targeted advertisements to these search service users. Query keyword targeting has been used by search engines to deliver relevant ads. For example, the AdWords advertising system by Google®, delivers ads targeted to keywords from search queries.

Current internet technologies for listing career opportunities or open job positions include, at least, listing available positions on a company's own website and/or listing the job for a fee on websites that specialize in posting job listings (i.e., job boards), such as StepStone®, Monster®, Careerbuilder®, HotJobs®, etc., or posting on other sites. Potential candidates frequently use search engines (such as Google® or Yahoo!®) to perform job related searches. Indeed, thousands of searches are performed daily to locate jobs. Companies (and job boards) are competing for candidate traffic from these major search engines to drive candidates to their posted jobs, whether posted on their own corporate website or on a website that specializes in posting job listings for a fee. Companies competing for candidate traffic to their career websites can use a "Pay per click" (PPC) advertising option.

PPC (also called "cost per click") is an Internet advertising model used to direct traffic to websites, where advertisers pay the publisher (typically a website owner) when the ad is clicked. With search engines, advertisers typically bid on keyword phrases relevant to their target market. This is called a campaign. Using pay-perclick advertising, a company pays for ads for their job links to be displayed at the top of a search engine results page. The company further pays for each user that clicks on each advertisement. Websites that utilize PPC ads will display an advertisement when a keyword query matches an advertiser's keyword list, or when a content site displays relevant content. Such advertisements are called sponsored links or sponsored ads, and appear adjacent to or above organic results on search engine results pages, or anywhere a web developer chooses on a content site. For each campaign it is important to target users as closely as possible.

Common used terms in internet marketing are the clickthrough and conversion rate. The clickthrough rate of an advertisement is defined as the number of clicks on an ad divided by the number of times the ad is shown (impressions), expressed as a percentage. The conversion rate is the ratio of visitors who convert casual content views or website visits into desired actions, which might include making an online purchase, submitting a form to request additional information or applying for a job.

In general, ads on content networks have a much lower click-through rate (CTR) and conversion rate (CR) than ads found on search engine results pages (SERPs) and consequently are less highly valued. Content network properties can include websites, newsletters and e-mails.

A problem with links on SERPs leading to landing pages of a job site is that these landing pages show non-relevant and/or bad matching results related to the search query that was filled out at the search site. It is in the interest of the job seeker to quickly find useful and relevant job listings. For the owner of the landing page, a high CTR and high CR is important for the landing page to be displayed at the top of a search engine results.

Document US 2009/0063468 A1 discloses a method which involves establishing base information, and creating a job site. A category page is created on the site, and a keyword is created. The keyword is associated with the category page, and the base information is associated with the category page, where a characteristic of the category page remains static regardless of the base information. The base information associated with the category page is optimized. An apply button is provided on a job listing page. The apply button is linked to an application page on a client site.

However, the invention from US 2009/0063468 A1 does not provide a means to list up-to-date jobs. This way, recently created job listings are not available yet and cannot be provided at the landing page, from the moment they are added on the system database. When recent added job listings are not shown on the landing page, eventual higher conversion or click rates are lost and thereby also the profit.

Also, the invention from US 2009/0063468 A1 does not provide a means to list popular jobs, i.e. the jobs that are clicked the most by the job seekers. Again, displaying popular (or more interesting) job listings on the landing page, increases conversion or click rates. The chance that job seekers apply for a job increases and hereby profit is gained.

The aim of the present invention is to provide a solution to overcome at least part of the above mentioned disadvantages. The invention thereto aims to provide that job listings are taken from an updated database of job listings as described in claim 1. In particular, the invention provides that the landing page can be updated to show the newest or most popular job listings and this every time the landing page is refreshed. This provides the job seeker up-to-date information on finding a job.

### SUMMARY

The present invention provides in one embodiment, a computer implemented method for advertising job listings on an employment portal hosted by an employment portal server. The method comprises the creation of a URL based on a domain name and country of the creator of the landing page and preferably dependent on a set of pre-defined keywords. The method further comprises the creation of a landing page preferably comprising metadata related to said set of keywords, said landing page comprising at least one method for displaying at least one set of job listings. The method further comprises that said set of job listings is preferably renewable and preferably said set of job listings is renewed each time said landing page is refreshed, thereby providing at least one up-to-date set of job listings.

The methods of the present invention have several advantages. In particular, the invention provides that the landing page can be updated to show the newest or most popular job listings and this every time the landing page is refreshed. This provides the job seeker up-to-date information on finding a job.

While multiple embodiments are disclosed, still other embodiments of the present invention will become apparent to those skilled in the art from the following detailed description, which shows and describes illustrative embodiments of the invention. As will be realized, the invention is capable of modifications in various obvious aspects, all without departing from the spirit and scope of the present invention. Accordingly, the drawings and detailed description are to be regarded as illustrative in nature and not restrictive.

### DESCRIPTION OF THE FIGURES

Further features, advantages and objects of the present invention will become apparent for the skilled person when reading the following detailed description of embodiments of the present invention, when taken in conjunction with the figures of the enclosed drawings.
**FIG. 1** is a flow-chart diagram illustrating the creation of a URL for a landing page together with the storing mechanism of job listings into the database in accordance with one embodiment of the invention.
**FIG. 2** is a flow-chart diagram illustrating the major steps in a process through which a job seeker is directed for a job application in accordance with one embodiment of the invention.
**FIG. 3** is a flow-chart diagram illustrating the construction of the sets of job listings on a landing page in accordance with one embodiment of the invention.
**FIG. 4** illustrates a search engine results page displaying an URL link in accordance with one embodiment of the invention.
**FIG. 5** illustrates a landing page in accordance with one embodiment of the invention.

### DETAILED DESCRIPTION OF THE INVENTION

The present invention relates to a computer implemented method for advertising job listings on an employment portal hosted by an employment portal server. Unless otherwise defined, all terms used in disclosing the invention, including technical and scientific terms, have the meaning as commonly understood by one of ordinary skill in the art to which this invention belongs. By means of further guidance, term definitions are included to better appreciate the teaching of the present invention.

As used herein, the following terms have the following meanings:
"A", "an", and "the" as used herein refers to both singular and plural referents unless the context clearly dictates otherwise. By way of example, "a compartment" refers to one or more than one compartment.

"About" as used herein referring to a measurable value such as a parameter, an amount, a temporal duration, and the like, is meant to encompass variations of +/-20% or less, preferably +/-10% or less, more preferably +/-5% or less, even more preferably +/-1% or less, and still more preferably +/-0.1% or less of and from the specified value, in so far such variations are appropriate to perform in the disclosed invention. However, it is to be understood that the value to which the modifier "about" refers is itself also specifically disclosed.

"Comprise," "comprising," and "comprises" and "comprised of" as used herein are synonymous with "include", "including", "includes" or "contain", "containing", "contains" and are inclusive or open-ended terms that specifies the presence of what follows e.g. component and do not exclude or preclude the presence of additional, non-recited components, features, element, members, steps, known in the art or disclosed therein.

The recitation of numerical ranges by endpoints includes all numbers and fractions subsumed within that range, as well as the recited endpoints.

In a first aspect the present invention provides a computer implemented method for advertising job listings on an employment portal hosted by an employment portal server the method comprising creating a URL based on a domain name and country of the creator of the landing page and creating a landing page linked to said URL, preferably comprising metadata related to a set of keywords, said landing page comprising at least one method for displaying at least one set of job listings **characterized in that** said set of job listings is renewable and **characterized in that** said set of job listings being renewed each time said landing page is refreshed, thereby providing at least one up-to-date set of job listings.

It is known by the person skilled in the art that the expression "creating" is also used herein to refer to the meanings of making, formatting and/or copying.

In a preferred embodiment, the present invention provides a method wherein the landing page is provided with at least one set of job listings wherein said job listings are the most recently created job listings on the employment portal related to said set of keywords.

This is an improvement for a job seeker to be offered the most recently added job listings related to a set of keywords. For the frequent seeker for jobs, there will be more chance that he/she will effectively apply for a job. Therefore, clickthrough and conversion rates will increase. This is important for both the job seeker as the company providing the employment portal. The costs spent on ads will be more effective.

In a preferred embodiment, the present invention provides a method wherein the landing page is provided with at least one set of job listings wherein said job listings are the most clicked job listings on the employment portal relating to said set of keywords.

This is an improvement for a job seeker to be offered the most clicked job listings related to a set of keywords. Popular job listings are in the interest of the seeker for interesting jobs. This way, less bad matching job listings will be displayed. There is more chance that a job seeker will effectively apply for a job. Therefore, clickthrough and conversion rates will increase. This is important for both the job seeker as the company providing the employment portal. The costs spent on ads will be more effective.

In a preferred embodiment, the present invention provides a method wherein the landing page is provided with widgets giving access to a first step of a job seeker service on the employment portal.

The expression "widget" is used herein to refer to an element of a graphical user interface (GUI) that displays an information arrangement changeable by the user, such as a checkbox or a text box. The defining characteristic of a widget is to provide a single interaction point for the direct manipulation of a given kind of data. In other words, widgets are basic visual building blocks which, combined in an application, hold all the data processed by the application and the available interactions on this data.

The expression "checkbox" is used herein to refer to a graphical user interface element (check box, tickbox, or tick box) that permits the user to make multiple selections from a number of options or to have the user answer yes (i.e. checked) or no (i.e. not checked) on a simple yes/no question. Typically, checkboxes are shown on the screen as a square box that can contain white space (for false) or a tick mark or X (for true), as pictured. A caption describing the meaning of the checkbox is normally shown adjacent to the checkbox. Inverting the state of a checkbox is done by clicking the mouse on the box, or the caption, or by using a keyboard shortcut, such as the space bar.

The expression "text box" is used herein to refer to a kind of widget used when building a graphical user interface (GUI). A text box's purpose is to allow the user to input text information to be used by the program. User-interface guidelines recommend a single-line text box when only one line of input is required, and a multi-line text box only if more than one line of input may be required. Non-editable text boxes can serve the purpose of simply displaying text. Typically, a text box is a rectangle of any size, possibly with a border that separates the text box from the rest of the interface. Text boxes may contain zero, one, or two scrollbars. Text boxes usually display a text cursor (commonly a blinking vertical line), indicating the current region of text being edited. It is common for the mouse cursor to change its shape when it hovers over a text box.

If a job seeker is offered widgets giving access to a first step of a job seeker service on the employment portal, the job seeker that does not find a matching job listing, can start the job searching process on the landing page itself. Therefore, there will be more chance that said seeker will effectively apply for a job. Therefore, clickthrough and conversion rates will increase. The costs spent on ads will be more effective.

In a more preferred embodiment, the present invention provides a method wherein widgets are provided on the landing page, wherein said widgets comprise checkboxes to select subregions of the job seekers country and/or subcategories of a category related to said set of keywords and wherein said job seeker is guided through one or more pages leading to a result page comprising a set of job listings, related to the input criteria of the job seeker. This way, a job seeker can select these subcategories in which he/she wants to find a job.

Therefore, there will be more chance that said seeker will effectively apply for a job and clickthrough and conversion rates will increase. The costs spent on ads will be more effective. Also this will decrease the amount of clicks needed to progress in the job searching process, which saves time for the job seeker. This will keep the job seeker on the employment portal for a longer time, which again will increase clickthrough and conversion rates.

In a preferred embodiment, the method of the present invention comprises a job listing being displayed on the landing page matching the user query.

In a preferred embodiment the invention, said URL corresponding to said predefined keyword set is displayed on a search engine results page wherein the search query is strongly related to said keyword set.

In a preferred embodiment, the present invention provides a method wherein at least one job listing, which is displayed on the landing page, is provided with a URL link to a job listing page on the employment portal or on a client site.

This will keep the job seeker on the employment portal for a longer time, which again will increase clickthrough and conversion rates for the employment portal company.

In a preferred embodiment, the present invention provides a method wherein all job listings, which are displayed on the landing page, are provided with a link to a job listing page on the employment portal or on a client site.

This will keep the job seeker on the employment portal for a longer time, which again will increase clickthrough and conversion rates for the employment portal company.

In a preferred embodiment, the present invention provides a method wherein said set of keywords comprises a keyword related to a job title and/or a location.

This provides more clarity for a job seeker on the content of a job listing. A job listing can be interpreted instantly.

In a preferred embodiment, the present invention provides a method wherein said set of pre-defined keywords is determined depending on a popular and/or relevant query.

This is advantageous not to lose bid costs for less interesting ads and hereby low clickthrough and conversion rates. Popularity and/or relevance can be determined on the knowledge in the employment portal company or by the use of dedicated tools such as e.g. Google AdWords keyword tools. The average clickthrough and conversion rates for all bids will increase with pre-defined keywords depending on popular and/or relevant chosen queries.

In a preferred embodiment, the present invention provides a method wherein said set of pre-defined keywords is determined depending on the country of the creator.

This will give the opportunity to allocate different keyword sets per country. Per country different terms can be used for the description of job listings. For instance, the country of a job seeker can be found through the country code of the URL corresponding to said landing page. Hereby, one can cope for the different languages practiced per country and for the different jobs available per country. This will increase clickthrough and conversion rates.

In a preferred embodiment, the present invention provides a method wherein the landing page only displays unique job listings, such that no job listing is displayed more than once on the landing page.

No duplicate job listings will be displayed. This will increase the chance a job seeker finds an interesting job. This will increase clickthrough and conversion rates for the employment portal company.

In a preferred embodiment, the present invention provides a method wherein at least one set of job listings on the landing page is supplemented with less matching set of keywords, in the case of lack of enough results.

In the case of lack of job listing results, the supplemented job listings will give the opportunity for a job seeker also to apply for less matching jobs. This will increase the chance a job seeker finds an interesting job. This will increase clickthrough and conversion rates for the employment portal company.

In a preferred embodiment, the present invention provides a method wherein a set of job listings lists a pre-determined amount of job listings.

This ensures that a job seeker will not be provided with a too little amount of job listings in a set on the landing page, so the clickthrough and conversion rates would be inferior. Also this ensures that a job seeker will not be provided with a too large amount of job listings in a set on the landing page, so the job seeker could lose interest and could leave from the employment page.

In a more preferred embodiment, the present invention provides a method wherein a set of job listings lists a one to twenty job listings, more preferably five to ten job listings, most preferably five job listings.

In a preferred embodiment, the present invention provides a method wherein a page is created wherein a list of job listings is displayed exceeding said pre-determined amount of a set of job listings and wherein a URL link is created on said landing page to said page.

This will give a job seeker the opportunity to find more job listings related to his/her job field. This will increase the chance to find an interesting job and will increase clickthrough and conversion rates for the employment portal company.

In a preferred embodiment, the present invention provides a method wherein an input text box is created on the landing page comprising a text field for the user to enter keywords related to a job title and a text field for the user to enter keywords related to a job location.

If the job seeker did not find any interesting jobs, e.g. entry of a wrong search query, than this gives the opportunity to keep the seeker on the portal for a new job searching process on the employment portal. The job seeker is able to fill out a job title and eventually a job location in a related text box. This will start a job searching process and keep the job seeker on the employment portal. This will increase the chance to find an interesting job and will increase clickthrough and conversion rates for the employment portal company.

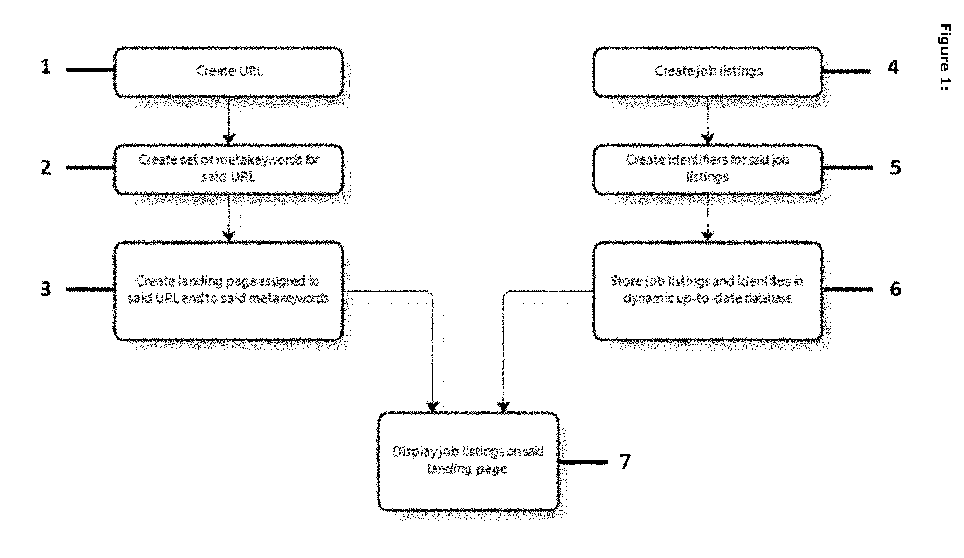

FIG. **1** describes the creation of a URL (block **1)** for a landing page in accordance with one embodiment of the invention. Hereby a set of metakeywords is defined for said URL (block **2).** Subsequently a landing page is created corresponding to said URL and said metakeywords (block **3**). Then, a bid is done on said determined set of metakeywords on a search website, such as Google®, etc. For said bid, relevant keywords for the target market are added for the advertisement. Examples of keywords can be "manager", "sap programmer", "accountant". As a result of this, the URL link will be displayed on the SERP of a related search query entered by the user. A SERP takes the bid metakeywords into account for a search query of a user. Dependent on the correlation and relevancy between said metakeywords and said search query said URL is shown on said SERP.

The figure also describes a storing mechanism of a job listing into the database in accordance with one embodiment of the invention. Job listings are created (block **4).** A job listing comprises identifiers such as job title, job content, job location, etc. Subsequently, appropriate keywords or identifiers concerning the job listing are determined (block **5**). The job listing together with said identifiers are stored in the database (block **6)** on the employment portal server. Each time a new job listing is available, e.g. a new job offer from a job provider, said job listing is added to an employment portal hosted by an employment portal server. Each time the landing page is accessed, the employment portal server will provide up-to-date job listings. The landing page will display up-to-date job listings on said landing page (block **7).** The job listing can be directly retrieved from the database, which is dynamically updated with new job listings.

The term "identifier" is used herein to refer to items to identify a job listing such as ID, job title, job content, company address, job location, job address (postal address), job function, job sector, job provider, contract type, work pattern, level of experience, language skills, distance, business trips frequency, function level, team size, company size, apply date, interest level, level of matching between the query and the offer and/or salary.

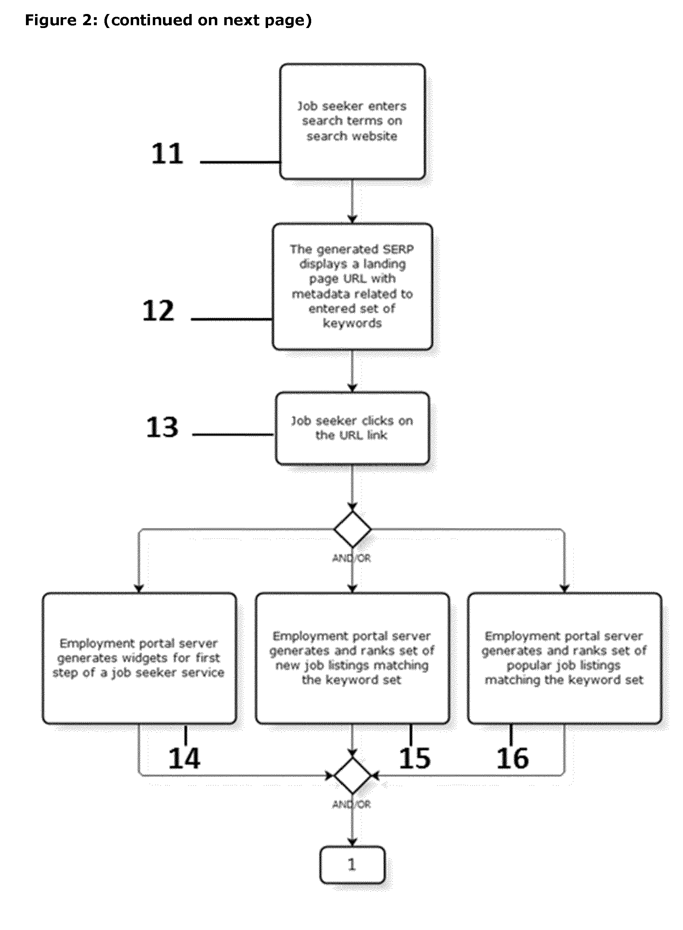

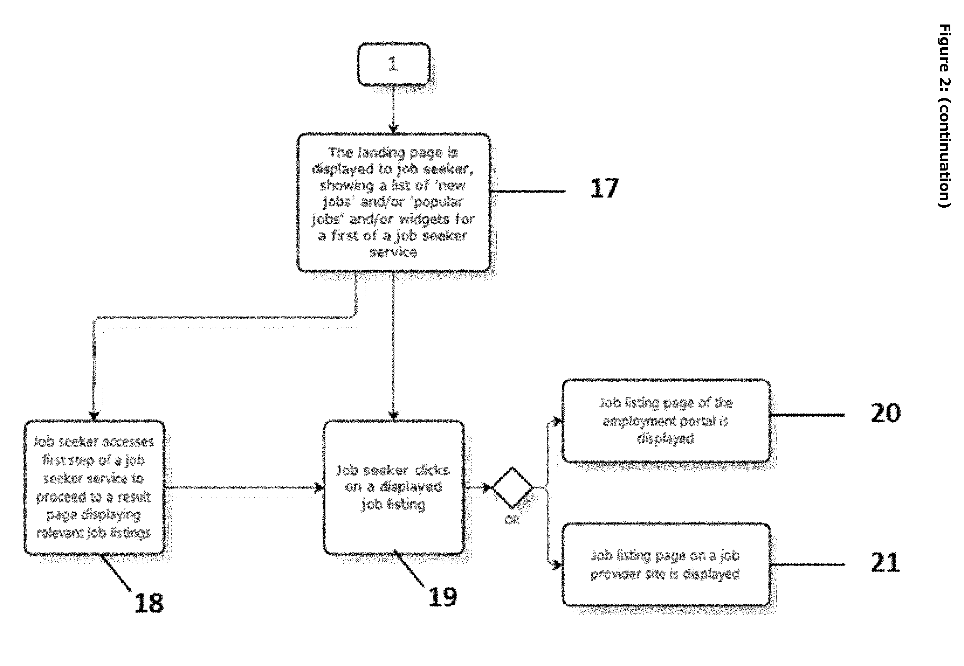

FIG. **2** describes the major steps in a process through which a job seeker is directed for a job application in accordance with one preferred embodiment of the invention. Preferably, a job seeker wants to find a job through a search website, this by filling out a search query on the search website (block **11).** The generated search engine results page (SERP) will display a URL link to a landing page based on predefined metakeywords related to the entered search terms (block **12).** Said keyword set is strongly related to said search query. If the job seeker clicks on this URL link (block **13),** the employment portal server is initiated to search for job listings related to said predefined metakeywords. Two different sets of job listings can be created, i.e. "new jobs" (block **15)** and/or "popular jobs" (block **16).** At least one of these set of job listings is displayed on the landing page (block **17).** Also the employment portal server can generate widgets for the first step of a job seeker service (block **14).**

Then, preferably the job seeker finds a suitable job listing listed on the landing page or on the generated result page in case the job seeker accessed said first step of the job seeking service (block **18)** and proceeded with the process. The job seeker can click on the associated URL link of a suitable job listing (block **19)** to get a job listing page displayed. This can be supplied by said employment portal (block **20)** or by a separate job provider site (block **21).**

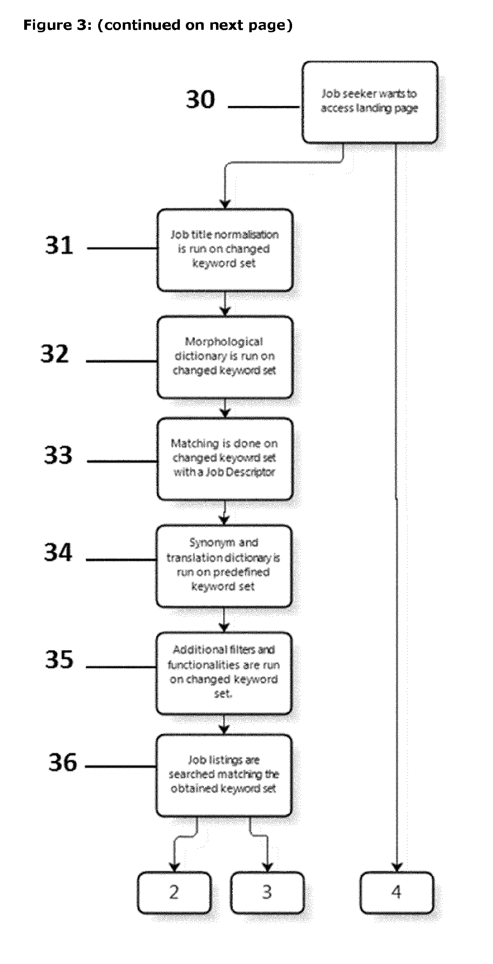

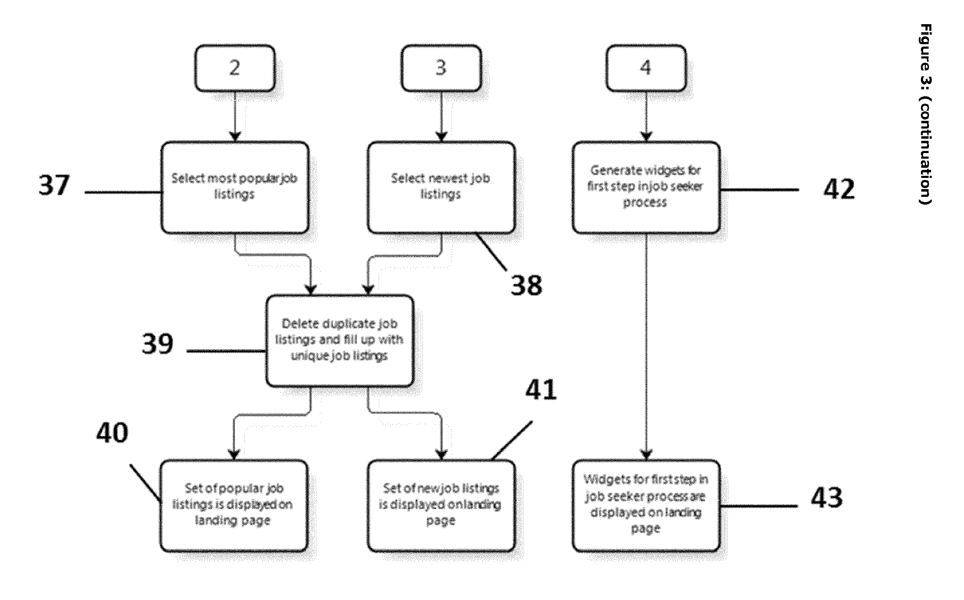

FIG. **3** describes the construction of the sets of job listings on a landing page in accordance one preferred embodiment of the invention. When a user wants to access a landing page (block **30),** different operations are taken before displaying the landing page.

Widgets are generated for the first step in a job seeker process (block **42).** These widgets are then displayed on the landing page (block **43).**

Next to this, job title normalization and cleaning (block **31)** is done on the set of keywords for the landing page. Subsequently a morphological analysis (block **32)** is done on the cleaned and normalized keyword set. Further matching is executed on said keyword set with a job descriptor (block **33),** which transforms the keyword set considering different morphological forms, abbreviations, derived and colloquial forms, synonyms, translations, hypernyms and hyponyms. Then, synonym and translation dictionary is run on the changed keyword set (block **34).**

Then, additional filters and/or functionalities are run on the changed keyword set (block **35)** which comprise a special treatment for compounds, i.e. words formed with 2 or several individual words (mostly occurring in Germanic languages), detection and removal from the listing of misleading phrases, e.g. mentioning a management position in an offer for an assistant job or mentioning the human resources department for a sales job, detection and removal of contact information in order to avoid matches on a proper name or street name, etc. Finally job listings are searched matching the obtained keyword set (block **36).** This leads to an initial set of job listing results.

Out of these results a set of most popular job listings is selected (block **37).** The job listings of the initial set are reordered according to the amount of clicks they receive. In a preferred embodiment this click value is refreshed every day.

Also, out of said results a set of newest job listings is selected (block **38).** The job listings of the initial set are reordered according to freshness or the last refresh date of the job listing in the database on the employment portal server.

For the set of most popular job listings and the set of newest job listings, eventual duplicate job listings are deleted and replaced with following job listings out of the selected results (block **39).** The sets are filled up so that only unique job listings are included. In case there are enough results, the results appearing on the set of most popular job listings and on the set of newest job listings are removed from the set where they rank the lower.

In a preferred embodiment of the invention, if this removal results in too few results, a message is displayed to the user indicating that too little job listings fit the keyword set and an alternate solution is proposed.

In another preferred embodiment of the invention, if this removal results in too few results, the set is filled up with "less well fitting jobs" by relaxing one of the matching constraints.

Finally, the landing page is displayed to the user, wherein a set of popular job listings (block **40),** a set of newest job listings (block **41)** and/or widgets for the first job seeker process step (block **42)** is shown.

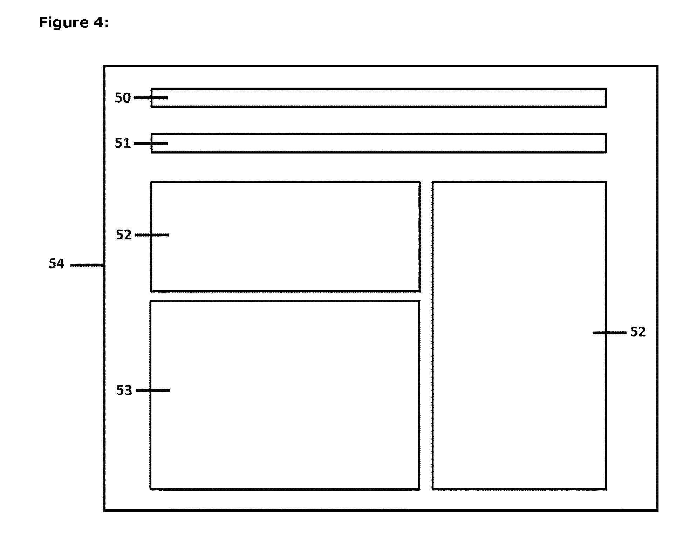

**FIG. 4** illustrates a search engine results page (block **54)** displaying an URL link in accordance with one embodiment of the invention. The webpage address of the SERP is displayed in the address box (block **50).** After a user has filled out a search query on a search site, the SERP is generated and displayed. The search query is shown in a text box (block **51),** together with some search results (block **53)** and several sponsored ads (block **52),** each providing a URL. When clicking on said URL link, a landing page will open comprising a set of metakeywords related to the search query.

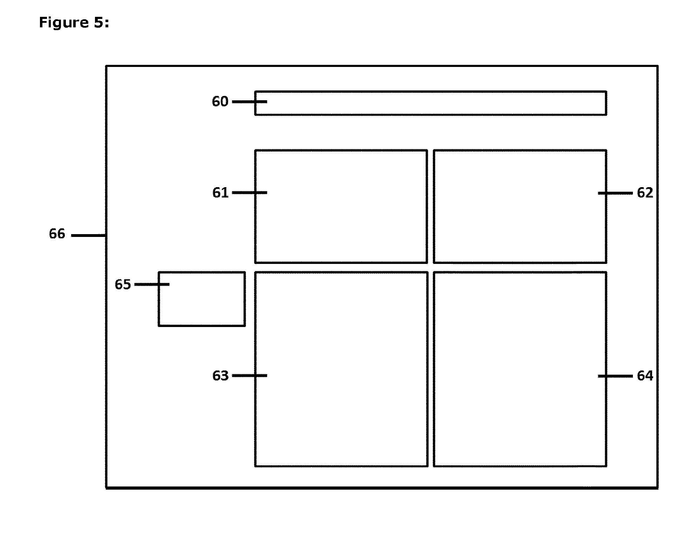

**FIG. 5** illustrates a landing page (block **66)** in accordance with one embodiment of the invention. The webpage address or said URL of the landing page is displayed in the address box (block **60).** Said landing page comprises a set of popular job listings (block **61),** a set of newest job listings (block **62)** and/or widgets for the first job seeker process step (blocks **63, 64** and **65).**

In a preferred embodiment, the present invention provides a method wherein widgets are provided on the landing page, wherein said widgets comprise checkboxes to select subregions of the job seekers country (block **64)** and/or checkboxes to select subcategories of a category related to said set of keywords (block **63)** and wherein said job seeker is guided through one or more pages leading to a result page comprising a set of job listings, related to the input criteria of the job seeker. This way, a job seeker can select these subcategories in which he/she wants to find a job.

In a preferred embodiment, the present invention provides a method wherein widgets are provided on the landing page, wherein said widgets (block **65)** comprise a text box for the user to enter keywords related to a job title and a text box for the user to enter keywords related to a job location.

In a preferred embodiment, job seeking behavior is tracked. The term "job seeking behavior" in underlying invention should be understood as online behavior of a job seeker in interaction with a job portal and/or with a landing page.

In a more preferred embodiment, said tracking of said job seeking behavior is accomplished by means of a cookie.

The term "cookie" in underlying invention should be understood as data stored in the form of one or more name-value pairs by a web browser. The data in a cookie is in text form, and may be in text files, though often for preserving privacy, the information is encrypted or encoded. A cookie is sent by a server to a web browser, which then stores it for later retrieval by the server. Any information that can be stored in text format, such as authentication information, a user's preferences with respect to options on a given web site or session tracking information, can be saved in a cookie and later retrieved by a server.

Said cookie can be used to track a job seeker's behavior with respect to a landing page. For example, when a job seeker requests a landing page and the job seeker's web browser does not contain a cookie, the employment portal server or a computerized component on said server will presume that this is the first webpage visited by the job seeker. Said server will create a random string and will send it as a cookie back to the browser together with the requested page. Further on, said cookie will automatically be sent by the browser to said server every time said landing page is requested. Said server will provide the landing page, but also will store said cookie in a behavior log file on said server.

In a most preferred embodiment, said cookie comprises a unique job seeker identifier and said employment portal server comprises a behavior log file comprising one or more behavior data fields.

The term "unique job seeker identifier" in underlying invention should be understood as a unique code, number or string associated with the job seeker.

The term "behavior data fields" in underlying invention should be understood as data fields associated with job seeking behavior such as traffic sources, the amount of visits, the last job listings viewed, the last categories visited, whether or not a job agent is created, whether or not a job agent is activated, the amount of job agents, whether or not a CV has been created, whether or not a CV is activated, whether or not the job seeker has an account, used search keywords on the portal web site, used search keywords on search engine or used search keywords on SERP, etc. The term "job agent" is to be understood as an account for a job seeker on the employment portal wherein search criteria can be determined and saved in order to automatically receive matching job listings, e.g. via e-mail.

The method is advantageous as it is possible to associate job seeking behavior with a job seeker. The use of a unique job seeker identifier in a cookie, allows to quickly identifying a known job seeker when said cookie does not contain a huge amount of data to be sent over the communication network.

By analyzing the collected behavior log files on the employment portal server, correlation between job listings and user interest data fields can be detected. Based on these correlations, the content on a landing page can be optimized. Tracking online behavior will allow analyzing and/or detecting job seeking patterns, job seeking activities, sequences, etc.

Based on said analysis, the employment portal, advertising method and/or landing page could be evaluated and improved in order to increase clickthrough and conversion rates and to improve campaign effectiveness. Hereby job listings can get filled earlier. Also this optimization would allow providing job seekers with more appropriate job listings.

Although the present invention has been described with reference to preferred embodiments thereof, many modifications and alternations may be made by a person having ordinary skill in the art without departing from the scope of this invention which is defined by the appended claims.

## Claims

1. A computer implemented method for advertising job listings on an employment portal hosted by an employment portal server the method comprising:
a. creating a URL based on a domain name and country of the creator of the landing page;
b. creating a landing page linked to said URL, preferably comprising metadata related to a set of pre-defined keywords, said landing page comprising at least one method for displaying at least one set of job listings **characterized in that** said set of job listings is renewable and **characterized in that** said set of job listings being renewed each time said landing page is refreshed, thereby providing at least one up-to-date set of job listings.

2. The method of claim 1 wherein the landing page is provided with at least one set of job listings wherein said job listings are the most recently created job listings on the employment portal related to said set of keywords.

3. The method of claim 1 or 2 wherein the landing page is provided with at least one set of job listings wherein said job listings are the most clicked job listings on the employment portal relating to said set of keywords.

4. The method of claim 1 to 3 wherein the landing page is provided with widgets giving access to a first step of a job seeker service on the employment portal.

5. The method of claim 1 to 4 wherein at least one job listing, which is displayed on the landing page, is provided with a URL link to a job listing page on the employment portal or on a client site.

6. The method of claim 1 to 5 wherein all job listings, which are displayed on the landing page, are provided with a link to a job listing page on the employment portal or on a client site.

7. The method of claim 1 to 6 wherein said set of pre-defined keywords comprises a keyword related to a job title and/or a location.

8. The method of claim 1 to 7 wherein said set of pre-defined keywords is determined depending on a popular and/or relevant query.

9. The method of claim 1 to 8 wherein said set of pre-defined keywords is determined depending on the country of the creator.

10. The method of claim 1 to 9 wherein the landing page only displays unique job listings, such that no job listing is displayed more than once on the landing page.

11. The method of claim 1 to 10 wherein at least one set of job listings on the landing page is supplemented with less matching set of keywords, in the case of lack of enough results.

12. The method of claim 1 to 11 wherein a set of job listings lists a pre-determined amount of job listings.

13. The method of claim 12 wherein a page is created wherein a list of job listings is displayed exceeding said pre-determined amount of a set of job listings and wherein a URL link is created on said landing page to said page.

14. The method of claim 1 to 13 wherein an input text box is created on the landing page comprising a text field for the user to enter keywords related to a job title and a text field for the user to enter keywords related to a job location.

15. The method of claim 1 to 14 whereby tracking of job seeking behavior is accomplished by means of a cookie, said cookie comprising a unique job seeker identifier and said employment portal server comprising a behavior log file, said file comprising one or more behavior data fields.
